**Europäisches Patentamt**

**European Patent Office**

**Office européen des brevets**

(19)

(11) Veröffentlichungsnummer: **0 040 681**
A1

(12) # EUROPÄISCHE PATENTANMELDUNG

(21) Anmeldenummer: **81102172.4**

(22) Anmeldetag: **23.03.81**

(51) Int. Cl.³: **E 04 C 5/16,** F 24 D 3/00,
F 24 H 9/06, F 16 L 3/08

(30) Priorität: **23.05.80 DE 3019861**

(43) Veröffentlichungstag der Anmeldung: **02.12.81**
**Patentblatt 81/48**

(84) Benannte Vertragsstaaten: **AT BE CH FR GB IT LI LU NL SE**

(71) Anmelder: **THERMOVAL Fussbodenheizungen Entwicklungs- und Forschungsgesellschaft m.b.H., Storchengasse 1, A-1150 Wien (AT)**

(72) Erfinder: **Haugeneder, Hans, Unterer Markt 8, A-3335 Weyer (AT)**

(74) Vertreter: **Skuhra, Udo, Dipl.-Ing. et al, Reinhard, Kreutz & Skuhra Patentanwälte Leopoldstrasse 51, D-8000 München 40 (DE)**

(54) **Vorrichtung zur Halterung von Heizungsrohren und/oder Bewehrungsgittern, insbesondere für Fussbodenheizungen.**

(57) Vorrichtung zur Halterung von Fußbodenheizungsrohren (5) in Abstand zu einem Unterboden (1) sowie wenigstens eines Bewehrungsgitters (7) in Abstand zum Unterboden (1), wobei das Bewehrungsgitter (7) zwischen den Fußbodenheizungsrohren (5) und dem Unterboden (1) angeordnet ist. Nach einer Abwandlung weist die Vorrichtung ein Verlängerungsstück auf, wodurch die Heizungsrohre (5) in einem größeren Abstand gegenüber dem Unterboden (1) sowie gegebenenfalls ein weiteres Bewehrungsgitter vorgesehen werden können. Durch die Anordnung der Fußbodenheizungsrohre (5) möglichst nahe an der Oberfläche (8) des aufzufüllenden Estrichs (4) ergibt sich ein sehr geringer Wärmedurchlaßwiderstand.

0040681

- 1 -

THERMOVAL Fußbodenheizungen Entwicklungs- und Forschungsgesellschaft mbH, Wien

---

Vorrichtung zur Halterung von Heizungsrohren und/oder Bewehrungsgittern, insbesondere für Fußbodenheizungen

---

Die Erfindung betrifft eine Vorrichtung zur Halterung von Heizungsrohren und/oder Bewehrungsgittern, insbesondere für Fußbodenheizungen, bestehend aus einem Fußabschnitt und einem Rohrhalterungsabschnitt.

Eine Halterung der eingangs genannten Art ist bereits aus der DE-OS 28 24 936 bekannt und weist einen Rohrhalterungsabschnitt und einen Fußabschnitt auf, wobei im Bereich des Fußabschnitts Nuten zum Einlegen von Bewehrungsstählen vorgesehen sind. Diese bekannte Vorrichtung hat den Nachteil, daß die Bewehrungsgitter bzw. Baustahlmatten nur in geringem Abstand gegenüber dem Unterboden angeordnet werden können, da der Fußabschnitt der Auflage der Bewehrungsgitter dient. Darüber hinaus können auch die Heizungsrohre nur in kleinem Abstand zum Unterboden angeordnet
werden,da die Schenkel des Rohrhalterungsabschnittes sich
direkt an den Fußabschnitt anschließen und nur in geringer Höhe
gegenüber dem Unterboden liegen. Falls die Heizungsrohre in
größerem Abstand zum Unterboden verlegt werden sollen, müßten die Schenkel verlängert werden, was zu einer instabilen
Halterung führt. Ein weiterer Nachteil der bekannten Vorrichtung ist darin zu sehen, daß die Einlegenuten für die Bewehrungsgitter in unterschiedlicher Höhe liegen und darauf
geachtet werden muß,wie das Halterungselement unter das Baustahlgewebe einzusetzen ist,damit jeweils der unten liegende
Baustahl in der unteren Einlegenut und der obere Baustahl in
der oberen Einlegenut zu liegen kommt.

Der Erfindung liegt die Aufgabe zugrunde, eine Vorrichtung
der eingangs genannten Art zu schaffen, welche auf einfache
Weise einsetzbar und zur Halterung wenigstens eines Bewehrungsgitters und von Heizungsrohren in Abstand zum Unterboden
verwendbar ist.

Diese Aufgabe wird erfindungsgemäß dadurch gelöst,daß der
Fußabschnitt und der Rohrhalterungsabschnitt getrennte und
zusammensteckbare Teile sind.

Weitere Ausgestaltungen der Erfindung ergeben sich aus den
Unteransprüchen.

Erfindungsgemäß werden Halterungselemente für Heizungsrohre
verwendet, welche die Heizungsrohre in Abstand über der
wärmedämmenden Schicht halten und außerdem den Einsatz von
Bewehrungsgittern bzw. Baustahlmatten in solcher Anordnung
ermöglichen, daß die Bewehrungsgitter in Abstand zur wärmedämmenden Schicht zwischen dieser wärmedämmenden Schicht
und den Heizungsrohren liegen. Auf diese Weise werden die
Heizungsrohre gegenüber bekannten Bodenkonstruktionen in

kleinerer Distanz zu der durch das abbindefähige oder erhärtende Medium gebildeten Oberfläche vorgesehen, so daß die
Höhe des abbindefähigen oder erhärtenden Mediums zwischen
der Oberseite der Heizungsrohre und der durch das Medium
gebildeten Bodenoberfläche relativ klein wird und dadurch
der Wärmedurchlaßwiderstand reduziert ist.

Gegebenenfalls kann durch den Einsatz der Bewehrungsgitter
die Gesamthöhe des die Heizungsrohre und die Bewehrungsgitter einbettenden Mediums gegenüber bekannten Bodenkonstruktionen reduziert werden.

Das abbindefähige oder erhärtende Medium wird beispielsweise durch einen Estrich gebildet, welcher nach der Anordnung der Halterungselemente, der Bewehrungsgitter und der
Heizungsrohre unter Einbettung letzterer auf die wärmedämmende Schicht aufgebracht wird.

Die erfindungsgemäße Vorrichtung ist vorteilhafterweise zweiteilig und besteht aus einem Rohrhalterungsabschnitt und einem Fußabschnitt, die zusammensteckbar
sind. Vor der Verlegung der Heizungsrohre werden die Bewehrungsgitter unter Einsatz der Fußabschnitte der
Vorrichtung auf der wärmeisolierenden Schicht angeordnet,
wobei die Bewehrungsgitter infolge der Fußabschnitte jeder Vorrichtung in Abstand gegenüber der wärmedämmenden
Schicht zu liegen kommen.

Vorzugsweise werden die Fußabschnitte jeder Vorrichtung
derart eingesetzt, daß sie die Bewehrungsgitter an Kreuzungspunkten von Bewehrungsstäben stützen. Die Rohrhalterungsabschnitte werden anschließend auf die Fußabschnitte
aufgesteckt, so daß die Bewehrungsgitter im Bereich der
Kreuzungsabschnitte von Bewehrungsstäben in jede Vorrichtung unter Einhaltung eines Abstandes gegenüber der
wärmedämmenden Schicht einsetzbar sind.

0040681

Die Fußabschnitte jeder Vorrichtung können jede beliebige Größe haben; vorzugsweise haben sie eine solche Fußfläche, daß ein Eindrücken in die wärmedämmende Schicht ausgeschlossen ist. Damit ist gewährleistet, daß auch bei Begehen der Bewehrungsgitter während der Montage der Heizungsrohre eine Beschädigung der wärmedämmenden Schicht ausgeschlossen ist.

Die erfindungsgemäßen Vorrichtungen können sowohl zum Einsatz von Heizungsrohren mit kreisrundem Querschnitt als auch von Heizungsrohren mit elliptischem Querschnitt konzipiert sein, wobei der Rohrhalterungsabschnitt entsprechend ausgebildet ist, um entweder Heizungsrohre mit kreisrunder oder ovaler bzw. elliptischer Form aufzunehmen.

Zur sicheren Aufnahme der Knotenpunkte d.h. der die Kreuzungspunkte bildenden Bewehrungsstähle von Bewehrungsgittern weist der Fußabschnitt Schlitze auf, so daß der jeweilige Knotenpunkt innerhalb des aufrechtstehenden Teils des Fußabschnitts zu liegen kommt. Der Rohrhalterungsabschnitt ist mit seitlichen Schenkeln versehen, die auf der Bodenfläche des Fußabschnitts nach dem Zusammensetzen des Rohrhalterungsabschnitts und des Fußabschnitts stützend zu liegen kommen.

Nach einer weiteren Ausführungsform ist wenigstens ein Zwischenstück vorgesehen, welches zwischen den Fußabschnitt und den Rohrhalterungsabschnitt einsetzbar ist. Damit ist es möglich, einen Estrich größerer Höhe zu verlegen und dabei die Heizungsrohre möglichst weit an der oberen Fläche des Estrichs anzuordnen. Das Zwischenstück weist vorzugsweise solche Schlitze wie der Fußabschnitt zur Aufnahme bzw. Lagerung von Baustählen im Bereich von durch Baustähle gebildeten Knotenpunkten auf; somit können bei Einsatz eines Zwischenstückes zwei Ebenen von Bewehrungen vorgesehen werden, was aus statischen Gründen bei entsprechender gros-

0040681

ser Stärke des Estrichs erforderlich sein kann. Der Estrich läßt sich bei Verwendung derart aufgebauter Halterungselemente in einem Stück verlegen und bildet vorteilhafterweise einen homogenen Körper.

Im folgenden werden bevorzugte Ausführungsformen der erfindungsgemäßen Vorrichtungen zur Erläuterung weiterer Merkmale beschrieben. Es zeigen:

Fig. 1 eine schematische Darstellung einer Bodenkonstruktion zur Erläuterung des Einsatzes der erfindungsgemäßen Vorrichtung,

Fig. 2 eine Darstellung zur Erläuterung der bei der Bodenkonstruktion nach Fig.1 auftretenden Druckkräfte und Zugspannungen,

Fig. 3 eine Perspektivansicht der erfindungsgemäßen Vorrichtung,

Fig. 4a eine Perspektivansicht des Fußabschnittes,

Fig. 4b eine Seitenansicht des Rohrhalterungsabschnitts,

Fig. 4c eine bodenseitige Ansicht des Rohrhalterungsabschnitts,

Fig. 5 eine schematische Darstellung einer Abwandlung der Erfindung, und

Fig. 6 eine Fig. 2 entsprechende Darstellung.

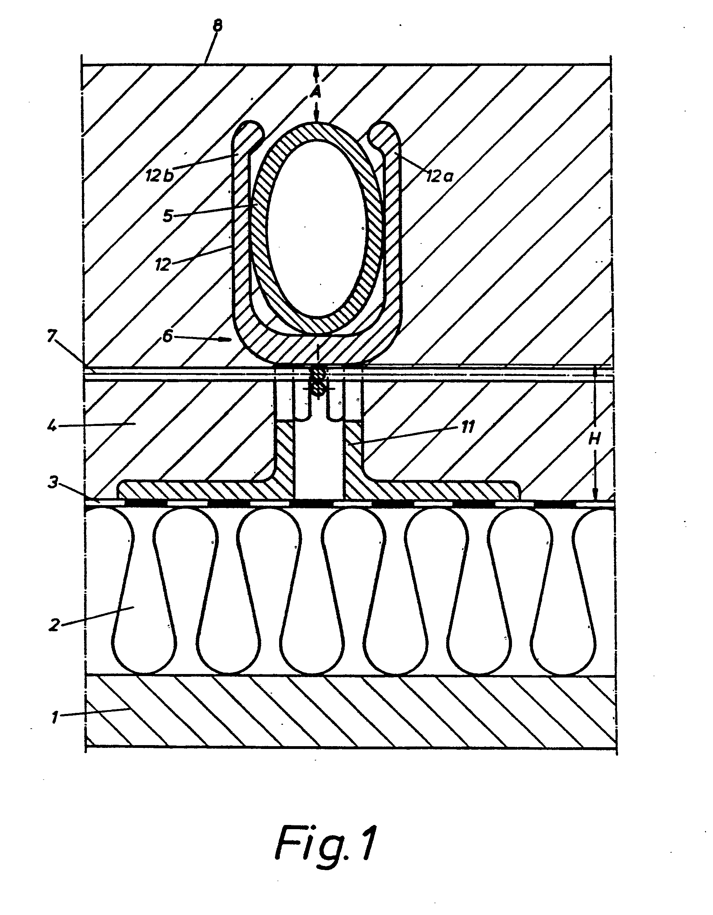

Fig. 1 zeigt eine schematische Schnittdarstellung einer Bodenkonstruktion unter Verwendung der erfindungsgemäßen Vorrichtung. Auf einem Unterboden 1, z.B. einem Rohbeton, ist eine wärmedämmende Schicht 2, beispielsweise in Form von Styroporplatten, vorgesehen. Auf die wärmedämmende Schicht 2 wird vorzugsweise eine Lage 3 eines dünnschichtigen Materials, beispielsweise eine Kunststoffolie aufgelegt. Über der Lage 3 befindet sich ein abbindefähiges oder erhärtendes Medium 4, beispielsweise eine Estrichschicht, in der Heizungsrohre 5 eingebettet sind. In der Estrichschicht 4 sind ferner Vorrichtungen nach der Erfindung, im folgenden Halterungselemente 6 genannt, eingebettet. Gemäß Fig.1 befindet sich jedes Heizungsrohr 5 in vorbestimmtem Abstand über der wärmedämmenden Schicht 2. Zwischen dem Heizungsrohr 5 und der wärmedämmenden Schicht 2 ist ein Bewehrungsgitter 7 vorgesehen, welches in horizontaler Lage in der Estrichschicht 4 eingebettet ist. Der Abstand der Heizungsrohre 5 von deren Unterkante bis zur Oberfläche der wärmedämmenden Schicht 2 ist größer als der Abstand zwischen dem Bewehrungsgitter 7 und der Oberfläche der wärmedämmenden Schicht 2.

Wie die schematische Darstellung nach Fig. 1 zeigt, ist das in üblicher Weise,z.B. mäanderförmig verlegte Heizungsrohr 5 dicht unterhalb der durch die Estrichschicht 4 gebildeten Bodenoberfläche 8 angeordnet, d.h. das Heizungsrohr 5 liegt sehr nahe an der Bodenoberfläche 8. Dies führt zu einem niedrigen Wärmedurchlaßwiderstand infolge der kleineren Distanz zwischen der Bodenoberfläche 8 und dem Heizungsrohr 5. Die Stärke der Estrichschicht 4 zwischen der Bodenoberfläche 8 und Oberkante des Heizungsrohres 5 ist in Fig. 1 mit A bezeichnet und gegenüber bekannten Bodenkonstruktionen zumindest um etwa die Höhe H des Fußabschnitts 11 des Halterungselementes 6 reduziert.

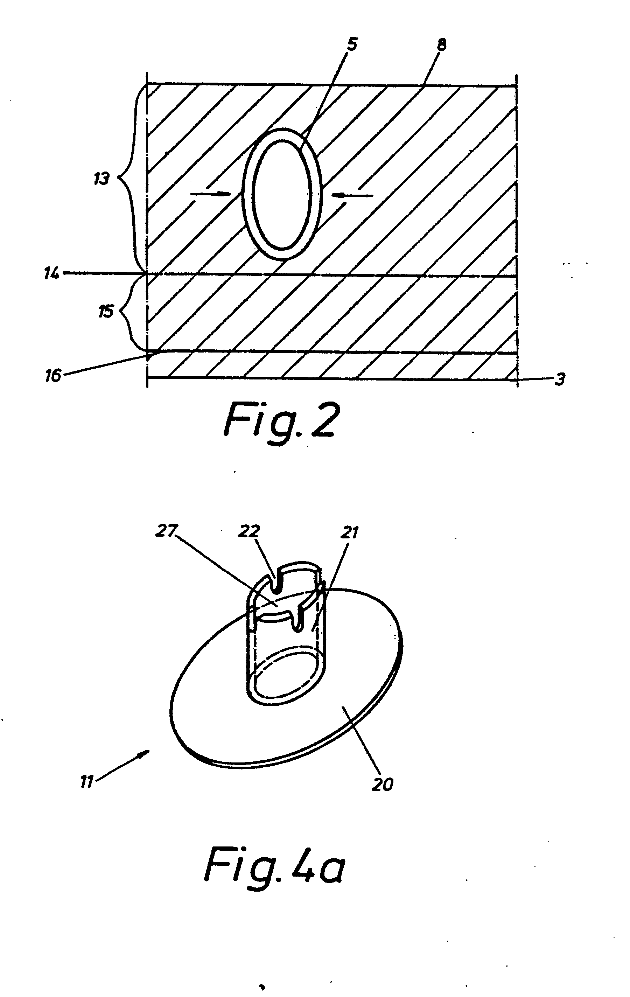

Fig. 2 zeigt die Beanspruchung einer Bodenkonstruktion entsprechend Fig. 1, jedoch ohne Bewehrungsgitter. Damit würden bei der Anordnung der Heizungsrohre 5 entsprechend der Darstellung nach Fig. 1 im Bereich 13 Druckkräfte auftreten, während die Zugspannungen entlang einer Linie 14 gleich Null wären. Im Bereich 15, insbesondere entlang und über einer nahe der Lage 3 bzw. der wärmedämmenden Schicht 2 liegenden gedachten Linie 16 treten große Zugspannungen
auf. Diese Zugspannungen werden erfindungsgemäß durch das
Bewehrungsgitter 7 aufgenommen, das zwischen den Heizungsrohren 5 und der Schicht 2 bzw. Lage 3 derart vorgesehen ist,
daß es Abstand zur wärmedämmenden Schicht 2 aufweist. Der
Abstand zwischen dem Bewehrungsgitter 7 und der wärmedämmenden Schicht 2 beträgt vorzugsweise mindestens 2 cm. Erfindungsgemäß wird daher das Bewehrungsgitter 7 vorzugsweise in Höhe der Linie 16 vorgesehen.

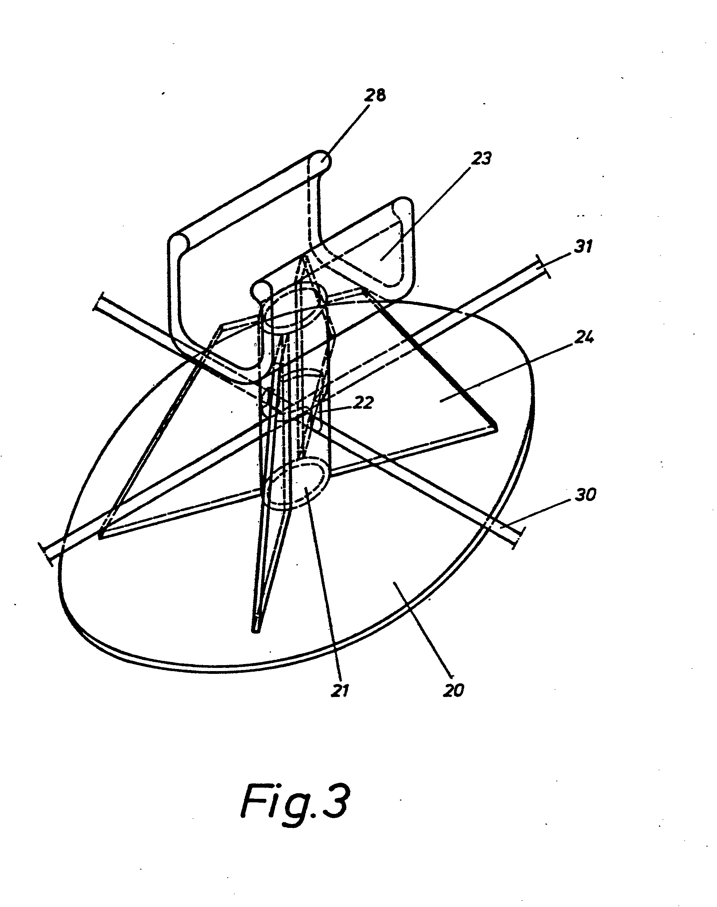

Mit der in Fig. 3 dargestellten Bodenkonstruktion unter Verwendung der erfindungsgemäßen Halterungselemente 6 läßt sich
die Lage der Heizungsrohre 5 innerhalb der Estrichschicht 4
in beliebiger Weise in Richtung auf die Bodenoberfläche 8
nach oben versetzen, wodurch der Wärmedurchlaßwiderstand
reduziert wird. Der Einsatz von Bewehrungsgittern 7 nimmt
die im unteren Bereich des Estrichs 4 auftretenden Zugspannungen in der Ebene der Anordnung der Bewehrungsgitter 7
auf; der Einsatz der Bewehrungsgitter 7 kann ferner dazu
ausgenutzt werden, die Höhe der Estrichschicht 4 im Vergleich zu bekannten Bodenkonstruktionen ohne Bewehrungsgitter zu verringern.

Wie aus vorstehender Beschreibung ersichtlich ist, werden
die erwähnten Vorteile in Bezug auf die Lage der Heizungsrohre 5 und die Verwendung der Bewehrungsgitter 7 dadurch
erreicht, daß die erfindungsgemäßen Halterungselemente 6
zur Halterung der Heizungsrohre 5 in Abstand zum Unterboden,
gebildet durch die Schichten 1 bis 3, vorgesehen sind.

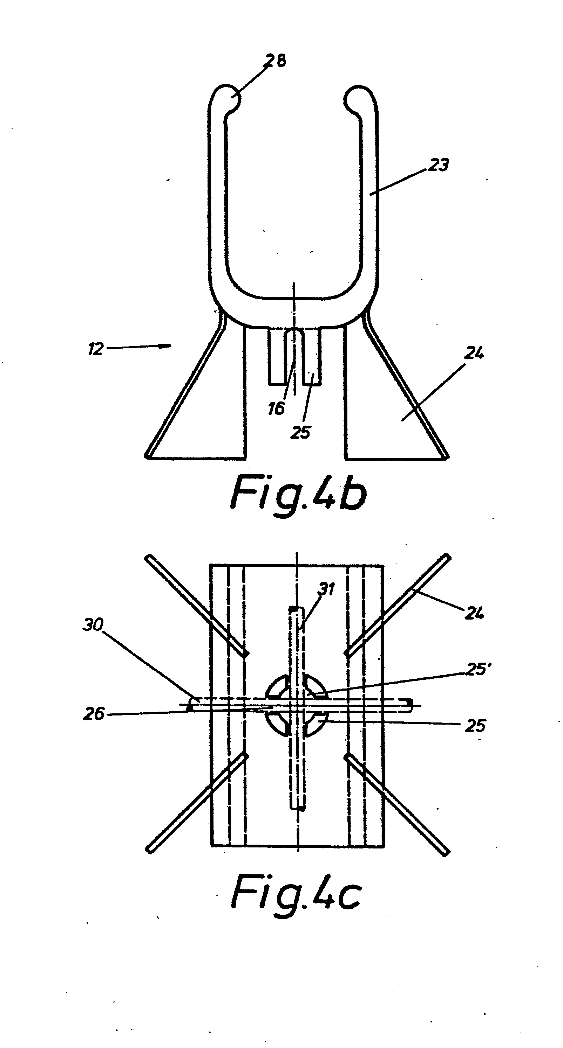

Die Halterungselemente 6 sind im wesentlichen derart konstruiert, daß sie die Bewehrungsgitter 7 an Knotenpunkten,
d.h. an Kreuzungspunkten der Bewehrungsstähle, aufnehmen
und abstützen, wobei vorgesehen ist, daß die Halterungselemente 6 nach ihrem Einsatz und der noch zu erläuternden
Verbindung mit dem Bewehrungsgitter 7 praktisch nicht verrückbar sind. Die Halterungselemente 6 haben ferner eine solche Gestalt, daß ein Eindrücken in die wärmedämmende
Schicht 2 infolge eines Begehens der Bewehrungsgitter 7
zur Verlegung der Heizungsrohre 5 ausgeschlossen ist. Die
Fig. 3 und 4 zeigen eine bevorzugte Ausführungsform des
erfindungsgemäßen Halterungselements 6.

Das Halterungselement 6 besteht im wesentlichen aus einem
Rohrhalterungsabschnitt 12 mit Befestigungsschenkeln 12a,12b
sowie einem Fußabschnitt 11. Der Fußabschnitt 11 wird durch
einen flächigen Fuß 20, der beliebige Größe hat und vorzugsweise kreisförmig ist, sowie ein senkrecht vom Fuß 20 nach
oben abstehendes Teil 21 gebildet. Das Teil 21 hat vorzugsweise die Form eines hohlen Zylinders und ist im Bereich
seines freien Randes mit vier Schlitzen 22 versehen. Die
Schlitze 22 sind im Teil 21 diametral einander gegenüberliegend ausgebildet und befinden sich auf Linien, die vorzugsweise rechte Winkel zueinander einhalten. Die Größe des
Fußes 20 wird vorteilhafterweise so groß gewählt, daß die
Fußabschnitte 11 durch die Maschen eines Bewehrungsgitters
7 hindurchgeführt werden können.Der dem Fußabschnitt 11 zugeordnete Rohrhalterungsabschnitt 12 besteht aus einem etwa
U-förmiges Profil aufweisenden Teil 23, welches durch die
Befestigungsschenkel 12a,12b gebildet wird und jede beliebige Länge haben kann, während seine Breite (entspricht etwa
dem Durchmesser eines Heizungsrohres 5) von solcher Größe gewählt ist, daß ein elliptisches oder kreisrundes Heizungsrohr 5 vorzugsweise klemmend von den Befestigungsschenkeln
12a,12b aufgenommen wird. An der Unterseite des Teiles 12
sind etwa strahlenförmig zur Achse eines geschlitzten Elementes 25 wegstehende Schenkel 24 vorgesehen, wie aus Fig.
4b und 4c ersichtlich ist. Mittig an der Unterseite des
Teiles 23 befindet sich das geschlitzte Element 25,das im
wesentlichen entsprechend der Form des Teiles 21 kreisringförmig ausgebildet ist und diametral einander gegenüberliegende Schlitze 26 enthält. Der Außendurchmesser des
kreisringförmigen Elementes 25 entspricht in etwa dem Innendurchmesser des Teiles 21 und die Schlitze 26 sind auf orthogonal zueinander stehenden Linien ausgebildet, wie dies
unter Bezugnahme auf das Teil 21 beschrieben ist. Die Höhe
des Elementes 25 kann kleiner als die der Schenkel 24 sein.
Fig. 3 zeigt, daß nach dem Aufsetzen des Rohrhalterungsabschnittes 12 auf den Fußabschnitt 11 die Schenkel 24 auf
dem Fuß 20 des Fußabschnittes 11 aufliegen, so daß eine
stabile Lagerung des Rohrhalterungsabschnittes 12 auf dem
Fußabschnitt 11 sichergestellt ist.

Die Schlitze 22,26 im Teil 21 und im Element 25 dienen zur
Aufnahme von Bewehrungsstählen 30,31 des Bewehrungsgitters
7 auf solche Weise, daß der Knotenpunkt zum Beispiel der
zwei Bewehrungsstähle 30,31 innerhalb der durch das Teil 21
bzw. das Element 25 definierten Öffnung 25' liegt, wie es
in Fig. 4c angedeutet ist. Wie Fig.1 zeigt, werden die Halterungselemente 6 derart eingesetzt, daß sie ein Bewehrungsgitter 7 jeweils im Bereich eines Knotenpunktes derart
lagern, daß der Knotenpunkt innerhalb der Öffnung 27 des
Fußabschnitts 11 und die betreffenden Bewehrungsstähle 30,
31 in den durch die Schlitze 22, 26 gebildeten Öffnungen
zwischen dem Fußabschnitt 11 und dem aufgesetzten Rohrhalterungsabschnitt 12 zu liegen kommen.

Die vom Knotenpunkt wegführenden Bewehrungsstähle 30,31
liegen in den Schlitzen 22 des Teiles 21 auf, nachdem das
Bewehrungsgitter 7 an mehreren Punkten auf die Fußabschnitte
11 aufgelegt ist und bevor die Rohrhalterungsabschnitte 12
in die zugehörigen Fußabschnitte 11 gesteckt werden. Nachdem
die Rohrhalterungsabschnitte 12 in den betreffenden Fußabschnitten 11 eingesteckt sind,können die Heizungsrohre 5
in bekannter Weise dadurch verlegt werden, daß sie zwischen
die Schenkel 12a,12b geklemmt werden. Eine stabile Befestigung
der Rohrhalterungsabschnitte 12 kann schließlich dadurch
gewährleistet sein,daß das gabelförmig geschlitzte Element
25 an seiner Außenwand (Fig.4b) seitliche und mit dem rohrförmigen Teil 21 zusammenwirkende Vorsprünge aufweist, so
daß zwischen dem Element 25 und dem Teil 21 eine Klemmbefestigung erreicht wird.

Der Rohrhalterungsabschnitt 12 kann bezüglich seines oberen Teiles 23 in beliebiger Weise ausgebildet sein, um entweder kreisringförmige Heizungsrohre 5 oder Heizungsrohre mit elliptischem Querschnitt aufzunehmen, wobei die große Achse der Ellipse senkrecht oder parallel zur Schicht 3 liegen kann. Eine unbeabsichtigte Herausbewegung der Heizungsrohre 5 aus dem Teil 23 der Rohrhalterungsabschnitte 12 wird durch nach innen gebogene Endabschnitte 28 an den oberen freien Kanten des Teils 23 sichergestellt.

Wie vorstehend bereits erläutert ist, besteht die wesentliche Funktion der erfindungsgemäßen Halterungselemente 6 darin, zum einen die Heizungsrohre 5 in einem bestimmten Abstand über der wärmedämmenden Schicht 2 zu halten und zum anderen die Bewehrungsgitter 7 durch Abstützen zumindest eines Teils seiner Knotenpunkte ebenfalls in einem Abstand über der wärmedämmenden Schicht 2 zu lagern.

Dabei wird das Heizungsrohr 5 mit seiner Unterkante oberhalb des Bewehrungsgitters 7 gelagert, während das Bewehrungsgitter 7 selbst in ausreichendem Abstand zur wärmedämmenden Schicht 2 abgestützt wird. Auf diese Weise ist nicht nur eine ziemlich nahe an der Oberfläche 8 der Estrichschicht 4 liegende Anordnung der Heizungsrohre 5 gewährleistet, sondern auch eine vollständige Einbettung des Bewehrungsgitters 7 im Estrich 4, so daß dessen Funktion der Aufnahme von Zugspannungen sichergestellt ist. Dadurch, daß die Heizungsrohre 5 entsprechend der Darstellung nach Fig. 2 im Druckbereich 13 der Bodenkonstruktion zu liegen kommen, ist ferner ein guter Kontakt zwischen der Estrichschicht 4 und den Außenwänden der Heizungsrohre 5 gewährleistet.

Die Halterungselemente 6 können bezüglich des Fußabschnitts 11 auch jede andere beliebige Form haben, beispielsweise einen quadratischen oder rechteckigen Fuß 20 aufweisen. Auch das Teil 21 kann in Verbindung mit dem Element 25 vier- oder
mehreckig ausgebildet sein, ohne daß dadurch die vorstehend
beschriebenen Funktionen der Lagerung der Heizungsrohre 5
und der Stützung des Bewehrungsgitters 7 beeinträchtigt
werden. Die Zahl der als Versteifungsrippen dienenden Schenkel 24 kann im Bedarfsfall erhöht oder erniedrigt werden.
Die Halterungselemente 6 werden vorzugsweise aus Kunststoff
gefertigt, können jedoch auch aus Metall und anderen Materialien hergestellt sein.

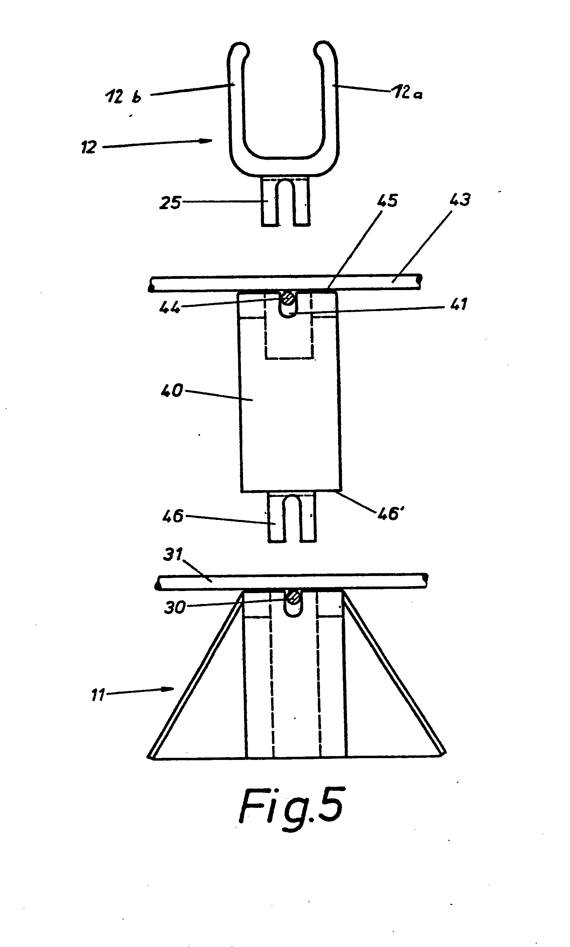

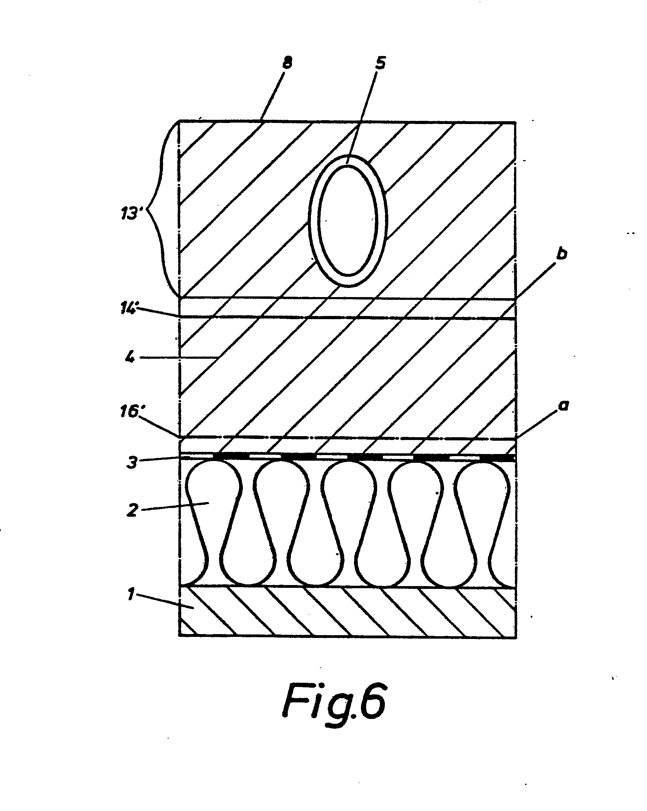

Unter Bezugnahme auf die Fig. 5 und 6 wird eine weitere
Ausführungsform der erfindungsgemäßen Vorrichtung beschrieben.
Die Vorrichtung bzw. das Halterungselement 6 hat den bereits
unter Bezugnahme auf Fig. 1 ff. beschriebenen Aufbau und
weist zusätzlich mindestens ein Verlängerungsstück 40 auf, welches zwischen den Rohrhalterungsabschnitt 12 und den Fußabschnitt 11 eingesetzt wird. An der Oberseite 45 weist das Verlängerungsstück 40 etwa gleiche Form und gleichen Aufbau auf, wie
bezüglich des Teiles 21 des Fußabschnitts 11 beschrieben ist,
d.h. das Verlängerungsstück 40 hat etwa zylindrische Form und
ist mit einander gegenüberliegenden Schlitzen 41 versehen, so
daß der Rohrhalterungsabschnitt 12 mit den Elementen 25 von oben
in das Verlängerungsstück 40 einsetzbar ist. Das Verlängerungsstück 40 weist an seiner Unterseite 46' eine entsprechende Ausbildung wie der Rohrhalterungsabschnitt 12 an seiner Unterseite
auf, d.h. ein kreisringförmiges, geschlitztes Element 46, welches
in der gleichen Weise geschlitzt ist, wie dies unter Bezugnahme auf das Element 25 in Verbindung mit Fig. 4b und Fig.
4c beschrieben ist. Damit läßt sich das Verlängerungsstück 40 in
den Fußabschnitt 11 von oben her einsetzen.

Die zusätzliche Verwendung des Verlängerungsstücks 40 gegenüber der unter Bezugnahme auf Fig. 1 bis
4 beschriebenen Ausführungsform ermöglicht es, daß die Höhe
des Estrichs um die Höhe des Verlängerungsstückes 40 größer sein
kann und gleichzeitig eine zweite Ebene mit Bewehrungs-

stählen 43,44 vorgesehen werden kann. Im Bedarfsfall ist aus statischen Gründen eine größere Estrichstärke erforderlich; dies läßt sich gemäß der Erfindung ohne weiteres erreichen, ohne den Nachteil einer zu tiefen Lagerung der Heizungsrohre in Kauf nehmen zu müssen. Wie die unter Bezugnahme auf Fig.5 beschriebene Ausführungsform zeigt, wird durch das Verlängerungsstück 40 der Rohrhalterungsabschnitt 12 und damit das Heizungsrohr in größerem Abstand gegenüber dem Unterboden bzw. der Schicht 2 gelagert als bei der Ausführungsform gemäß den Fig. 1 bis 4. Jedes Halterungselement 6 dient gleichzeitig zur Lagerung von zwei übereinander liegenden Bewehrungsgittern im Bereich der Knotenpunkte der Bewehrungsstähle 30,31 (untere Ebene) und 43 44 (obere Ebene in Fig. 5). Ersichtlicherweise kann auch mehr als ein Verlängerungsstück 40 vorgesehen werden, falls die Stärke des Estrichs noch größer sein soll.

Fig. 6 zeigt eine schematische Darstellung zur Erläuterung der Lage des Heizungsrohres 5, das gegenüber Fig. 2 in einen Estrich größerer Stärke eingebettet ist und ziemlich nahe an der oberen Fläche 8 des Estrichs liegt, um einen möglichst geringen Wärmedurchlaßwiderstand zu gewährleisten. In Fig. 6 ist diejenige Linie, entlang welcher Druckkräfte auftreten, mit 14' und diejenige Linie, entlang welcher Zugkräfte auftreten, mit 16' bezeichnet. Die Heizungsrohre 5 liegen entsprechend Fig. 2 oberhalb der Linie 14, d.h. in dem Bereich 13', in welchem Druckkräfte auftreten. Der Abstand zwischen der Unterkante der Heizungsrohre 5 und der Lage 3 beträgt etwa 20 cm.

Der Vorteil der unter Bezugnahme auf Fig. 5 und 6 beschriebenen Bodenkonstruktion liegt darin, daß der Estrich in einem Stück gegossen werden kann, wenn das Halterungselement gemäß Fig. 5 verwendet wird und der Estrich nach Erhärtung einen homogenen Körper bildet. Dieser Vorteil ergibt sich durch die variable Höhe der erfindungsgemäßen Halterungselemente infolge der Möglichkeit, die Höhe der

0040681

Halterungselemente durch das Einfügen der Verlängerungsstücke 40 zu erhöhen. In der Praxis hat sich dies als besonders vorteilhaft erwiesen: nach den bisherigen Techniken werden demgegenüber Halterungselemente verwendet, die hinsichtlich ihrer Höhe nicht veränderbar sind. Dabei ergibt sich der Nachteil, daß der Estrich nicht über die gesamte, notwendige Höhe gegossen werden kann, sondern z.B. nur über die halbe Höhe, wonach dann auf den erhärteten Estrich Halterungselemente mit den Heizungsrohren aufgelegt und dann der Estrich über die restliche Höhe aufgefüllt wird. Dabei ergibt sich ersichtlicherweise kein homogener Körper der beiden Estrichlagen im Gegensatz zu der Möglichkeit nach vorliegender Erfindung.

0040681

THERMOVAL Fußbodenheizungen Entwicklungs- und Forschungsgesellschaft mbH, Wien

## Patentansprüche

1. Vorrichtung zur Halterung von Heizungsrohren und/oder Bewehrungsgittern, insbesondere für Fußbodenheizungen, bestehend aus einem Fußabschnitt und einem Rohrhalterungsabschnitt,
dadurch gekennzeichnet,
daß der Fußabschnitt (11) und der Rohrhalterungsabschnitt (12) getrennte und zusammensteckbare Teile sind.

2. Vorrichtung nach Anspruch 1, dadurch gekennzeichnet, daß der Fußabschnitt (11) aus einem flächig ausgebildeten Fußteil (20) und einem Aufnahmeteil (21) besteht.

3. Vorrichtung nach Anspruch 2, dadurch gekennzeichnet, daß das Aufnahmeteil (21) umfangsmäßig verteilte Schlitze (22) zur Aufnahme von Bewehrungsstählen des Bewehrungsgitters (7) aufweist.

4. Vorrichtung nach Anspruch 3, dadurch gekennzeichnet, daß

S/br

die Schlitze (22) auf orthogonal zueinander stehenden
Linien vorgesehen sind.

5. Vorrichtung nach Anspruch 1, dadurch gekennzeichnet, daß
   der Rohrhalterungsabschnitt (12) ein mit Schlitzen (26)
   versehenes Befestigungselement (25) aufweist.

6. Vorrichtung nach wenigstens einem der vorangehenden Ansprüche, dadurch gekennzeichnet, daß an dem Rohrhalterungsabschnitt (12) Stützflächen (24) angeformt sind.

7. Vorrichtung nach Anspruch 6, dadurch gekennzeichnet,daß
   die Stützflächen (24) im wesentlichen strahlenförmig
   vom Rohrhalterungsabschnitt (12) abstehend ausgebildet
   sind.

8. Vorrichtung nach wenigstens einem der vorangehenden Ansprüche, dadurch gekennzeichnet, daß ein Verlängerungsstück (40) vorgesehen ist, welches zwischen den Rohrhalterungsabschnitt (12)und den Fußabschnitt (11) einsetzbar ist.

9. Vorrichtung nach Anspruch 8, dadurch gekennzeichnet, daß
   das Verlängerungsstück (40) Schlitze (41) zur Aufnahme
   von Bewehrungsstählen (43,44) eines weiteren Bewehrungsgitters aufweist.

10. Vorrichtung nach einem der vorangehenden Ansprüche, dadurch gekennzeichnet, daß die Schlitze (22) des Fußabschnitts (11) in Abstand zum Fußteil (20) vorgesehen sind.

11. Vorrichtung nach wenigstens einem der vorangehenden Ansprüche, dadurch gekennzeichnet, daß die Schlitze (41)
    des Verlängerungsstücks (40) an dessen einem freien Ende
    (45) ausgebildet sind.

0040681

12. Vorrichtung nach Anspruch 11, dadurch gekennzeichnet, daß am anderen freien Ende (46') des Verlängerungsstückes (40) und/oder am unteren Ende des Rohrhalterungsabschnittes (12) ein im wesentlichen kreisringförmiges, geschlitztes Element (25; 46) ausgebildet ist, dessen Außendurchmesser etwa dem Innendurchmesser der Öffnung (27,47) am oberen freien Ende (45) des Verlängerungsstücks (40) bzw. des Fußabschnitts (5) entspricht.

0040681

Fig.1

Fig.2

Fig.4a

*Fig.3*

0040681

**Fig.4b**

**Fig.4c**

*Fig.5*

Fig.6

Europäisches
Patentamt

**EUROPÄISCHER RECHERCHENBERICHT**

0040681

Nummer der Anmeldung

EP 81 10 2172.4

## EINSCHLÄGIGE DOKUMENTE

| Kategorie | Kennzeichnung des Dokuments mit Angabe, soweit erforderlich, der maßgeblichen Teile | betrifft Anspruch |
|---|---|---|
| | GB - A - 1 057 138 (A.B. ABERG) <br> * Anspruch 1; Seite 2, Zeilen 46 bis 80; Fig. 1 bis 3 * <br> -- | 1,5, 8 |
| | DE - B2 - 2 534 928 (S. VIGH) <br> * Spalte 1, Zeilen 59 bis 63; Fig. 1 bis 3 * <br> -- | 1 |
| A | DE - A1 - 2 843 108 (TOUR & ANDERSSON) <br> * Fig. 1 bis 3 * <br> -- | |
| A | DE - A1 - 2 807 446 (ITW-ATECO GMBH) <br> * Fig. 1 bis 5 * <br> -- | |
| A,P | DE - U1 - 8 006 327 (KELLNER GMBH) <br> * Fig. 1 bis 3 * <br> -- | |
| A | DE - U1 - 7 922 652 (R. WOESTE & CO.) <br> * Fig. 1 bis 4 * <br> ---- | |

**KLASSIFIKATION DER ANMELDUNG (Int. Cl.³)**

E 04 C 5/16
F 24 D 3/00
F 24 H 9/06
F 16 L 3/08

**RECHERCHIERTE SACHGEBIETE (Int. Cl.³)**

E 04 C 5/00
F 24 D 3/00
F 24 H 9/00
F 16 L 3/00

**KATEGORIE DER GENANNTEN DOKUMENTE**

X: von besonderer Bedeutung
A: technologischer Hintergrund
O: nichtschriftliche Offenbarung
P: Zwischenliteratur
T: der Erfindung zugrunde liegende Theorien oder Grundsätze
E: kollidierende Anmeldung
D: in der Anmeldung angeführtes Dokument
L: aus andern Gründen angeführtes Dokument
&: Mitglied der gleichen Patentfamilie, übereinstimmendes Dokument

X Der vorliegende Recherchenbericht wurde für alle Patentansprüche erstellt.

| Recherchenort | Abschlußdatum der Recherche | Prüfer |
|---|---|---|
| Berlin | 18-08-1981 | v. WITTKEN |

EPA form 1503.1  08.78